Europäisches Patentamt

European Patent Office

Office européen des brevets

(19)

(11) Veröffentlichungsnummer. **0 012 869**
**A1**

(12) **EUROPÄISCHE PATENTANMELDUNG**

(21) Anmeldenummer: **79104770.7**

(22) Anmeldetag: **29.11.79**

(51) Int. Cl.³: **A 61 C 1/12**

(30) Priorität: **22.12.78 DE 2855796**

(43) Veröffentlichungstag der Anmeldung:
**09.07.80 Patentblatt 80/14**

(84) Benannte Vertragsstaaten:
**AT CH DE FR GB IT SE**

(71) Anmelder: **SIEMENS AKTIENGESELLSCHAFT Berlin
und München**
**Postfach 22 02 61**
**D-8000 München 22(DE)**

(72) Erfinder: **Straihammer, Reinhard
In der Hollerhecke 10
D-6141 Einhausen(DE)**

(54) Zahnärztliche Handstückanordnung.

(57) Zahnärztliche Handstückanordnung mit einem mit einem Antrieb (2) gekuppelten oder kuppelbaren antriebsseitigen Handstückteil und einem demgegenüber geneigt angeordneten und abnehmbar daran gehalterten, ein Kopfgehäuse zur Lagerung eines Werkzeuges (5) aufweisenden werkzeugseitigen Handstückteil sowie mit durch Getriebeverzahnungen miteinander in Eingriff stehenden und mit ihren Achsen (6, 8) unter einem Neigungswinkel ($\propto$) zueinander geneigten Triebwellenabschnitten in beiden Handstückteilen. Zur Erzielung eines kleineren Handstückquerschnittes und eines weicheren Übergangs an der Knickstelle des Handstückes ist der Neigungswinkel ($\propto$) durch wenigstens zwei Stufen gebildet, wozu zwischen den beiden Triebwellenabschnitten zumindest ein weiterer Triebwellenabschnitt angeordnet ist, dessen Achse (7) die Achsen (6, 8) der beiden anderen Triebwellenabschnitte unter einem kleineren Winkel ($\propto_1$, $\propto_2$) als der Neigungswinkel ($\propto$) schneidet.

EP 0 012 869 A1

FIG 1

SIEMENS AKTIENGESELLSCHAFT     Unser Zeichen
Berlin und München     VPA 78 P 5143 EUR

Zahnärztliche Handstückanordnung

Die Erfindung bezieht sich auf eine zahnärztliche Handstückanordnung mit einem mit einem Antrieb gekuppelten oder kuppelbaren antriebsseitigen Handstückteil und einem demgegenüber geneigt angeordneten und abnehmbar daran gehalterten, ein Kopfgehäuse zur Lagerung eines Werkzeuges aufweisenden werkzeugseitigen Handstückteil, sowie mit durch Getriebeverzahnungen miteinander in Eingriff stehenden, mit ihren Achsen unter einem Neigungswinkel ($\measuredangle$) zueinander geneigten Triebwellen-abschnitten in beiden Handstückteilen.

Es sind zahnärztliche Winkelhandstücke bekannt, bei denen die beiden Handstückteile üblicherweise unter einem Winkel von etwa 15 bis 21$^{\circ}$, in der Regel 20$^{\circ}$, zueinander geneigt angeordnet sind. Der Neigungswinkel ist aus bedienungstechnischen Gründen insbesondere deswegen so gewählt, damit die Spitze des im Kopfgehäuse drehbar gelagerten Werkzeuges etwa in der Verlängerung der Achse

Rp 5 Kli / 15.12.1978

des antriebsseitigen Handstückteils zu liegen kommt. Im Bereich der Knickstelle sind dann auch Getriebe zur Über- bzw. Untersetzung der Drehzahlen vom Antrieb auf das Werkzeug angeordnet. Um die erforderlichen Getriebeabstufungen (in der Regel 1:3 bzw. 3:1) erreichen zu können, ist es bisher notwendig gewesen, an der Knickstelle im Durchmesser relativ große Getrieberäder vorzusehen. Bei einer solchen Anordnung ist es äußerst schwierig, an der Knickstelle, die im Regelfall gleichsam eine Trennstelle für die beiden Handstückteile ist, auch noch Kühlmittelleitungen mit ausreichend großem Querschnitt und den dazugehörigen Kupplungs- und Dichtmitteln inkorporiert, d.h. innerhalb des Handstückquerschnittes, unterzubringen, insbesondere im Hinblick auf die bestehende Forderung, den Gesamtdurchmesser des Handstückes möglichst klein zu halten.

Aufgabe der Erfindung ist es, eine zahnärztliche Handstückanordnung der eingangs genannten Art zu schaffen, die im Vergleich zu den bekannten Konstruktionen im Durchmesser kleiner gehalten werden kann und bei der Kühlmittelleitungen mit den an der Trennstelle erforderlichen Kupplungs- und Dichtmitteln bei diesem kleineren Durchmesser in ausreichender Querschnittsgröße angeordnet werden können.

Das gestellte Ziel wird bei einer Handstückanordnung der eingangs genannten Art gemäß der Erfindung dadurch erreicht, daß der Neigungswinkel durch wenigstens zwei Stufen gebildet ist, wozu zwischen den beiden Triebwellenabschnitten zumindest ein weiterer Triebwellenabschnitt angeordnet ist, dessen Achse die Achsen der beiden anderen Triebwellenabschnitte unter einem kleineren Winkel als der Neigungswinkel schneidet.

Durch die gemäß der Erfindung vorgeschlagene Anordnung der Triebwellenabschnitte können - unter Beibehaltung der Gesamtlänge des Handstückes - im Durchmesser kleinere Triebzahnräder vorgesehen und dadurch der Außendurchmesser des Handstückes reduziert werden. Die Unterbringung und Verlegung von Kühlmittelleitungen innerhalb des Handstückes ist leichter als bisher möglich. Die Anordnung ermöglicht es sogar, die Leitungen größer zu dimensionieren und damit die Gefahr von Verkalkung und Verstopfung zu vermindern. Ein weiterer Vorteil ist, daß der abrupte und scharfe Knick, wie er bei den bekannten Handstücken gegeben ist, entfällt. vielmehr ein weicher Übergang vom geraden zum geneigten Handstückteil gegeben ist.

Vorteilhafte Ausgestaltungen und Weiterbildungen der Erfindung sind in den Unteransprüchen enthalten.

Ein Ausführungsbeispiel der Erfindung wird anhand der Zeichnung näher erläutert.
Es zeigen:

     Fig. 1 eine zahnärztliche Handstückanordnung mit einem Winkelhandstückaufsatz in schaubildlicher Darstellung,

     Fig. 2 einen Teil der in Fig. 1 gezeigten Handstückanordnung im Längsschnitt.

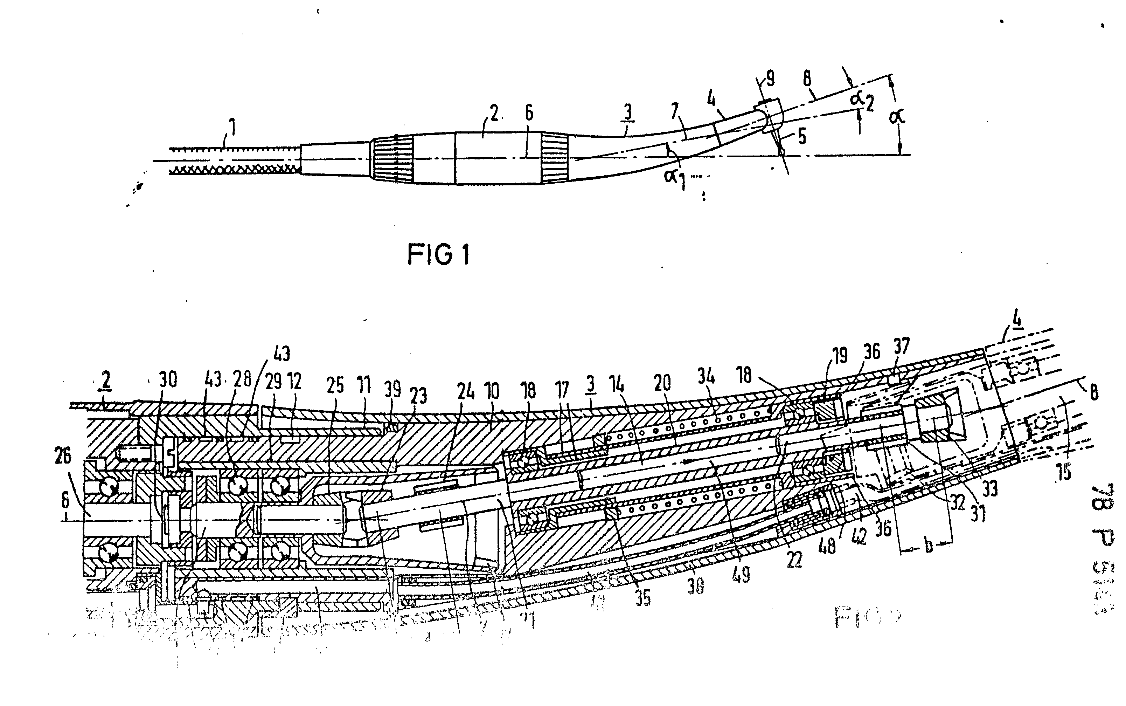

Die Fig. 1 zeigt in einer schaubildlichen Darstellung eine zahnärztliche Handstückanordnung mit einem an einen Versorgungsschlauch 1 angeschlossenen Antriebsmotor 2 und einem sich daran anschließenden Winkelhandstück 3. Das Winkelhandstück 3 enthält ein Kopfteil 4 mit einem nicht näher bezeichneten Kopfgehäuse, in dem ein Werk-

- 4 -        VPA 78 P 5143 EUR

zeug 5 drehbar gelagert ist. Zur Übertragung der Drehbewegung vom Antriebsmotor 2 auf das Werkzeug 5 enthält die Handstückanordnung mehrere miteinander in Eingriff befindliche Triebwellenabschnitte, deren Achsen mit den Bezugszeichen 6 bis 9 versehen sind.

Der zwischen den Längssymmetrieachsen von Kopfteil 4 und Antriebsmotor 2 aus arbeitstechnischen Gründen notwendigerweise vorgegebene Neigungswinkel $\alpha$ , der in der Regel zwischen $18^o$ und $21^o$ liegt, teilt sich, wie im folgenden noch näher erläutert wird, im Bereich des Handstückes 3 auf zwei Stufen mit den Winkeln $\alpha_1$ und $\alpha_2$ auf, wobei sich der Winkel $\alpha_1$ durch den Schnittpunkt der beiden Achsen 6 und 7 und der Winkel $\alpha_2$ durch den Schnittpunkt der Achsen 7 und 8 bestimmt. Die beiden Winkel $\alpha_1$ und $\alpha_2$ sind so bemessen, daß unter Berücksichtigung der erforderlichen Getriebeüber- oder -untersetzung und der aus Festigkeitsgründen erforderlichen Module bzw. Mindestzähnezahlen der Zahnräder durch sie eine im Durchmesser und in der Länge ausgewogene harmonische äußere Kontur mit kontinuierlich abnehmendem Außendurchmesser vom einen zum anderen Handstückende erreicht wird, ohne daß die Handstückanordnung dadurch verlängert wird. Vorteilhaft ist es, wenn der eine Einzelwinkel (beispielsweise der Winkel $\alpha_1$) größer ist als ein Viertel des Gesamtwinkels $\alpha$. Als besonders vorteilhaft hat sich etwa der halbe Winkelbetrag als Einzelwinkel $\alpha_1$ oder $\alpha_2$ erwiesen.

Die Fig. 2 zeigt das Handstück 3 und einen Teil des Antriebsmotors 2 im Längsschnitt. Das Handstück 3 enthält einen Grundkörper 10, der in eine konzentrisch zur Triebwellenachse 6 angeordnete Führungshülse 11 des Antriebsmotors 2 eingeschoben und dort drehbar, axial aber nicht verschiebbar gelagert ist. Als Führungs- und Feststellmittel für eine axiale Fixierung der Teile zueinander sind an sich bekannte Rast- und Führungsmittel in Form eines in eine Nut 12 des Grundkörpers 10 eingreifenden Rastbolzens 13 vorgesehen.

Im Grundkörper 10 ist ein erster Triebwellenabschnitt 14 längs der Achse 7 verschiebbar gelagert, der einerseits mit einem kopfteilseitigen zweiten Triebwellenabschnitt 15 und andererseits mit einem antriebsseitigen dritten Triebwellenabschnitt 16 in Eingriff steht. Der Triebwellenabschnitt 14 wird im wesentlichen gebildet aus zwei miteinander fest verbundenen äußeren Führungshülsen 17 und einer in Lagern 18, die durch eine Schlitzmutter 19 miteinander verspannt sind, drehbar gelagerten inneren Führungshülse 20, in der bolzenartig Wellen 21 und 22 eingepreßt sind. An der Welle 21 sind zwei in einem Abstand a zueinander angeordnete Triebzahnräder 23, 24 befestigt, von denen das eine (23) als Kronenrad und das andere (24) als Stirnrad ausgebildet ist. Das Kronenrad 23 steht in Eingriff mit einem Kronenrad 25 des (dritten) Triebwellenabschnittes 16. Beide Kronenräder haben gleiche Zähnezahl, so daß über diese Verzahnung eine Direktübertragung der Antriebsdrehzahl von der Triebwelle 26 des Antriebsmotors 2 über den Triebwellenabschnitt 16 auf den Triebwellenabschnitt 14 (im Verhältnis 1:1) erfolgt. Der Triebwellenabschnitt 16 enthält noch ein weiteres gleichachsiges, innen verzahntes Triebzahnrad 27, das bei Verschiebung des Triebwellenabschnittes 14 in Richtung der Achse 7 mit dem Triebzahnrad 24 in Eingriff kommt.

Der Triebwellenabschnitt 16 ist Bestandteil des Antriebsmotors und mittels Lager 28 in einer Hülse 29 gelagert, die wiederum im Grundkörper 10 fest oder lösbar angeordnet ist. Mit 30 ist eine Kupplung bezeichnet, die den Triebwellenabschnitt 16 mit der Triebwelle 26 des Antriebsmotors 2 verbindet.

An der kopfteilseitigen Welle 22 des Triebwellenabschnittes 14 ist ein Stirnrad 31 angeordnet, welches mit einem in der Darstellung gestrichelt eingezeichneten, innen verzahnten Getrieberad 32 bei aufgesetztem Kopfteil 4 in Eingriff steht. In die Welle 22 ist im Abstand b ähnlich bei den Zahnrädern 23, 24 ein Kronenrad 33 bolzenartig eingepreßt. Das Kronenrad 33 steht in der gezeichneten Lage außer Eingriff mit den Getriebeteilen des Triebwellenabschnittes 15.

An der einen äußeren Hülse 17 des Triebwellenabschnittes 14 liegt mit dem einen Ende eine Druckfeder 34, deren anderes Ende sich an einem im Grundkörper 10 eingelegten Ring 35 abstützt. Die Druckfeder 34 versucht den gesamten Triebwellenabschnitt in Richtung Kopfteil zu drücken. Bei abgenommenem Kopfteil liegt der Triebwellenabschnitt mit einer Stirnfläche 36 an einem Anschlagbolzen 37 an. Durch die in Eingriff befindlichen Getriebeteile 23 und 25 wird eine Direktübertragung und durch die Getriebeteile 31, 32 eine Untersetzung der über die Triebwellenabschnitte 16 und 14 vom Antriebsmotor übertragenen Drehzahl erreicht, und zwar in einem Verhältnis von 2,5:1. Diese damit untersetzte Drehzahl wird in bekannter Weise dann im Kopfteil 4 durch ein weiteres Untersetzungsgetriebe im Verhältnis 1,2:1 nochmals untersetzt, so daß insgesamt eine Untersetzung der Drehzahl im Verhältnis von etwa 3:1 erzielt wird.

Über den Grundkörper 10 ist eine am Kopfteil 4 befestigte Hülse 38 unter Zwischenlage eines O-Ringes 39

aufgeschoben. Die Hülse 38 ist zusammen mit dem Kopfteil 4 mittels einer im Bereich der Schnittlinie VI/VI befindlichen und in unserer deutschen Patentanmeldung P ... (unser Zeichen VPA 78 P 5144) näher dargestellten und erläuterten Rasteinrichtung mit dem Grundkörper 10 lösbar verbunden. Mit dieser Verbindung ist eine axiale Fixierung des Kopfteils 4 am Grundkörper und damit eine axiale Festlegung der für einen Eingriff erforderlichen Abstände der Triebwellenabschnitte gegeben.

Im Grundkörper 10 und im Kopfteil 4 des Handstückes 3 sowie im Antriebsmotor 2 sind Kühlmittelleitungsabschnitte 40, 41 und 42 für die Medien Luft und Wasser angeordnet, wobei in der Darstellung nur die Leitungsabschnitte für ein Medium zu erkennen sind. Die Medienübergabe von Antriebsmotor 2 auf das gegen diesen drehbare Handstück 3 erfolgt in bekannter Weise über mit den betreffenden Kühlmittelleitungsabschnitten verbundene Ringkanäle 43 im einen und mit diesen korrespondierenden radialen Kanälen 44 im anderen Teil des Handstückes bzw. Antriebsmotors. Zur Abdichtung der beiden Drehkupplungsstellen sind O-Ring-Dichtungen 45 vorgesehen.

Bei Abnahme des Kopfteils 4 vom Grundkörper 10, was durch Lösen der oben erwähnten Rasteinrichtung geschieht, wird durch die Druckfeder 34 der gesamte Triebwellenabschnitt 14 in Richtung des Pfeiles 49 nach rechts bewegt, bis die Stirnfläche 36 am Anschlagbolzen 37 des Grundkörpers 10 zur Anlage kommt. Durch diese Längsbewegung kommt einerseits die Verzahnung der Kronenräder 23 und 25 außer und die Zahnräder 27 und 24 in Eingriff. Durch Aufsetzen eines anderen Kopfteils kommt dann das Kronenrad des Triebwellenabschnittes des Kopfteils mit dem Kronenrad 33 in Eingriff.

Patentansprüche

1. Zahnärztliche Handstückanordnung mit einem mit einem Antrieb gekuppelten oder kuppelbaren antriebsseitigen Handstückteil und einem demgegenüber geneigt angeordneten und abnehmbar daran gehalterten, ein Kopfgehäuse zur Lagerung eines Werkzeuges aufweisenden werkzeugseitigen Handstückteil sowie mit durch Getriebeverzahnungen miteinander in Eingriff stehenden und mit ihren Achsen unter einem Neigungswinkel ($\alpha$) zueinander geneigten Triebwellenabschnitten in beiden Handstückteilen, d a d u r c h  g e k e n n - z e i c h n e t , daß der Neigungswinkel ($\alpha$) durch wenigstens zwei Stufen gebildet ist, wozu zwischen den beiden Triebwellenabschnitten (15, 16) zumindest ein weiterer Triebwellenabschnitt (14) angeordnet ist, dessen Achse (7) die Achsen (6, 8) der beiden anderen Triebwellenabschnitte (15, 16) unter einem kleineren Winkel ($\alpha_1$, $\alpha_2$) als der Neigungswinkel ($\alpha$) schneidet.

2. Handstückanordnung nach Anspruch 1, d a d u r c h  g e k e n n z e i c h n e t ;  daß ein Einzelwinkel ($\alpha_1$) größer ist als ein Viertel des Gesamtneigungswinkels ($\alpha$), vorzugsweise den halben Winkelbetrag des Gesamtwinkels ($\alpha$) aufweist.

3. Handstückanordnung nach Anspruch 1 oder 2, d a - d u r c h  g e k e n n z e i c h n e t ,  daß der weitere Triebwellenabschnitt (14) zusammen mit dem antriebsseitigen Triebwellenabschnitt (16) in einem Grundkörper (10) des antriebsseitigen Handstückteils (3) angeordnet ist.

4. Handstückanordnung nach Anspruch 3, d a d u r c h
g e k e n n z e i c h n e t , daß der weitere Triebwellenabschnitt (14) ein axial verschiebbares Getriebe
bildet mit an beiden Enden des Triebwellenabschnittes
(14) in einem Abstand (a, b) voneinander angeordneten
Triebzahnrädern (23, 24; 31, 33) mit unterschiedlicher Zähnezahl, von denen jeweils ein Triebzahnrad
(23, 31) in Eingriff steht mit einem Triebzahnrad (25,
32) einerseits des antriebsseitigen und andererseits
des werkzeugseitigen Triebwellenabschnittes (16 bzw.
15), wobei bei axialer Verschiebung des weiteren Triebwellenabschnittes (14) der Zahneingriff an beiden Enden
aufgehoben und mit den anderen Triebzahnrädern (24, 33)
dieses weiteren Triebwellenabschnittes (14) ein anderer
hergestellt wird.

5. Handstückanordnung nach einem der Ansprüche 1 bis 4,
d a d u r c h   g e k e n n z e i c h n e t , daß
zumindest der antriebsseitige Triebwellenabschnitt (16)
Bestandteil des Antriebsmotors (2) ist.

FIG 1

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE − C − 283 565 (WEBER et al.) <br> * Anspruch; Fig., Position a * <br> --- | 1 |
| | DE − C − 890 118 (SCHULZE) <br> * Fig. 2, Positionen 15, 17 * <br> --- | 1 |
| A | DE − A1 − 2 636 373 (SIEMENS AG) <br> * Fig. 1 * <br> --- | 1 |
| A | DE − B − 1 219 170 (KALTENBACH & VOIGT) <br> * Ansprüche 1, 4 * <br> ---- | 4 |

**KLASSIFIKATION DER ANMELDUNG (Int.Cl.³)**

A 61 C    1/12

**RECHERCHIERTE SACHGEBIETE (Int. Cl.³)**

A 61 C    1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 18−03−1980 | DROPMANN |

EPA form 1503.1  06.78